# EUROPEAN PATENT SPECIFICATION

(11) **EP 2 061 237 B1**
(45) Date of publication and mention of the grant of the patent: **12.09.2012**
(21) Application number: 08166871.7
(22) Date of filing: 17.10.2008
(51) Int. Cl.: H04N 5/45, H04N 5/21

(54) **Display apparatus and control method thereof**
Anzeigevorrichtung und Verfahren zu ihrer Ansteuerung
Appareil d'affichage et son procédé de commande

(30) Priority: 13.11.2007 KR 20070115308
(43) Date of publication of application: 20.05.2009
(73) Proprietor: Samsung Electronics Co., Ltd., Gyeonggi-do 442-742 (KR)
(72) Inventor: Kwak, Byung-ju, Hwaseong-si (KR)
(74) Representative: Waddington, Richard

(56) References cited:
- WO-A-01/84845
- GB-A- 2 307 122
- JP-A- 3 190 384
- JP-A- 4 259 173
- US-A- 4 521 810
- US-B1- 6 473 135
- [Online] 30 April 2002 (2002-04-30), XP007908209 Retrieved from the Internet: URL:http://www.intersil.com/data/fn/fn3148 .pdf> [retrieved on 2009-04-15]
- PERICOM: "All Purpose Analog Switch Design Hints", INTERNET CITATION, 1 November 1999 (1999-11-01), pages 101-104, XP007918661, Retrieved from the Internet: URL:http://www.pericom.com/pdf/application s/AB007.pdf [retrieved on 2011-05-18]

## Description

### BACKGROUND OF THE INVENTION

### Field of the Invention

Apparatuses and methods consistent with the present general inventive concept relate to a display apparatus and a control method thereof, and more particularly, to a display apparatus which receives a plurality of image signals and transmits one of the plurality of image signals by minimizing interference among the plurality of image signals, and a control method thereof.

### Description of the Related Art

A display apparatus includes a computer monitor or a TV. The display apparatus processes a received image signal and displays an image on various types of display units including a liquid crystal display (LCD), a plasma display panel (PDP) or a cathode ray tube (CRT). The display apparatus may receive an image signal from various image signal sources such as a broadcasting station or a DVD player and process the image signal.

The display apparatus may receive a plurality of image signals from a plurality of image signal sources as well as from a single image signal source. If the display apparatus receives the plurality of image signals from the plurality of image signal sources, the display apparatus has a switch to select one of the plurality of image signals. For example, if the display apparatus receives image signals from an airwave broadcasting station and a cable broadcasting station through an antenna and a cable respectively, the image signals are transmitted to the switch first. Then, the switch selects and outputs one of the image signals.

According to a conventional display apparatus, the switch mainly includes a single element such as a relay or a switching IC. In this case, interference among a plurality of image signals inputted to the switch depends on an insulation of the switch itself. If the insulation of the switch is not good, there is potential interference among the plurality of inputted image signals. Ultimately, a quality of a displayed image is lowered. If the insulation property of the switch is improved to prevent the lowering of the image quality, manufacturing costs increase too much.

Such a problem also arises when images corresponding to two signals of a plurality of image signals are displayed with a picture in picture (PIP) function.

XP007908209 from www.intersil.com/data/fn/fn3148.pdf discloses a multiplexer having multiple inputs and a single output.

### SUMMARY OF THE INVENTION

Accordingly, it is an aspect of the present general inventive concept to provide a display apparatus which selects one of a plurality of received image signals by minimizing interference between the selected image signal and other image signals, and a control method thereof.

Also, it is another aspect of the present general invention concept to provide a display apparatus which processes a single image signal outputted without interference with other image signals, and displays images on a main screen and a sub screen, respectively, and a control method thereof.

Additional aspects and/or advantages of the present general inventive concept will be set forth in part in the description which follows and, in part, will be clear from the description, or may be learned by practice of the present general inventive concept.

According to the present invention there is provided an apparatus and method as set forth in the appended claims. Other features of the invention will be apparent from the dependent claims, and the description which follows.

According to an aspect of the present invention, there is provided a display apparatus, comprising: a plurality of line switching units which correspond to a plurality of image signals and selectively transmit the plurality of image signals; an output switching unit which selectively outputs one of the plurality of image signals transmitted by the plurality of line switching units; and a controller which controls the line switching units and the output switching unit to output one of the plurality of image signals.

Each of the line switching units may comprise a main switching element which is provided on a transmission line transmitting an image signal to the output switching unit, and a branch switching element which is installed on a branch line branched from the transmission line and having an end part connected to the ground. When the main switching element is turned on, the branch switching element is turned off and when the main switching element is turned off, the branch switching element is turned on.

The main switching element may be plurally provided in series on the transmission line.

The branch line may be plurally branched from the transmission line in parallel with each other to be connected to the ground, and each branch line has the branch switching element thereon.

The transmission line may be plurally provided, and the plurality of line switching units corresponds to each transmission line respectively.

The output switching unit may comprise a first output switch and a second output switch which output the image signals, respectively, the display apparatus further comprising: a splitter which splits the image signal transmitted by the line switching units into a first image signal and a second image signal and transmits the first and second image signals to the first and second output switches, respectively.

The display apparatus may further comprise: a display unit which has a main screen and a sub screen and displays images on the main screen and the sub screen; a main signal processor which processes the first image signal and displays an image on the main screen; and a sub signal processor which processes the second image signal and displays an image on the sub screen.

The display apparatus may further comprise a splitter which splits an image signal outputted by the output switching unit into a first image signal and a second image signal to output the image signals.

The display apparatus may further comprise: a display unit which has a main screen and a sub screen and displays images on the main screen and the sub screen; a main signal processor which processes the first image signal and displays an image on the main screen; and a sub signal processor which processes the second image signal and displays an image on the sub screen.

According to another aspect of the invention, there is provided a control method of a display apparatus, the control method comprising: transmitting an image signal by one of a plurality of line switching units corresponding to a plurality of image signals respectively; and outputting the image signal transmitted by one of the line switching units through an output switching unit.

The one line switching unit may comprise a main switching element which is provided on a transmission line transmitting an image signal to the output switching unit, and a branch switching element which may be installed on a branch line branched from the transmission line and having an end part connected to the ground, and may be turned on and off oppositely to the main switching element, wherein the transmitting the image signal through the line switching unit comprises changing a logical operation of the main switching element and the branch switching element to selectively transmit and shut down image signals.

The display apparatus may further comprise a display unit which has a main screen and a sub screen to display images on the main screen and the sub screen, respectively, the outputting the image signal through the output switching unit comprises splitting the image signal transmitted by the line switching unit into a first image signal and a second image signal to output the image signals; and processing the first image signal and the second image signal to display images on the main screen and the sub screen, respectively.

The output switching unit may comprise a first output switch and a second output switch which output the image signals, respectively, and the splitting and outputting the image signals may comprise transmitting the first image signal and the second image signal to the first output switch and the second output switch, respectively.

Another aspect of the general inventive concept is a display apparatus, comprising a plurality of line switching units which transmit a plurality of image signals. One of said plurality of signals is selectively displayed and plurality of signals other than said one of said plurality of signals are transmitted to the earth.

Accordingly a plurality of signals are revived with one being selectively displayed. The rest of the signals are transmitted to the earth.

### BRIEF DESCRIPTION OF THE DRAWINGS

The above and/or other aspects of the present general inventive concept will become apparent and more readily appreciated from the following description of the embodiments, taken in conjunction with the accompanying drawings of which:
FIG. 1 illustrates a switching circuit of a display apparatus according to a first exemplary embodiment of the present general inventive concept;
FIG. 2 illustrates a display apparatus employing the switching circuit in FIG. 1;
FIG. 3 is a flowchart of transmitting and processing an image signal from the display apparatus in FIG. 2; and
FIG. 4 illustrates a switching circuit of a display apparatus according to a second exemplary embodiment of the present general inventive concept.

### DETAILED DESCRIPTION OF EXEMPLARY EMBODIMENTS

Hereinafter, exemplary embodiments of the present general inventive concept will be described with reference to accompanying drawings, wherein like numerals refer to like elements and repetitive descriptions will be avoided as necessary.

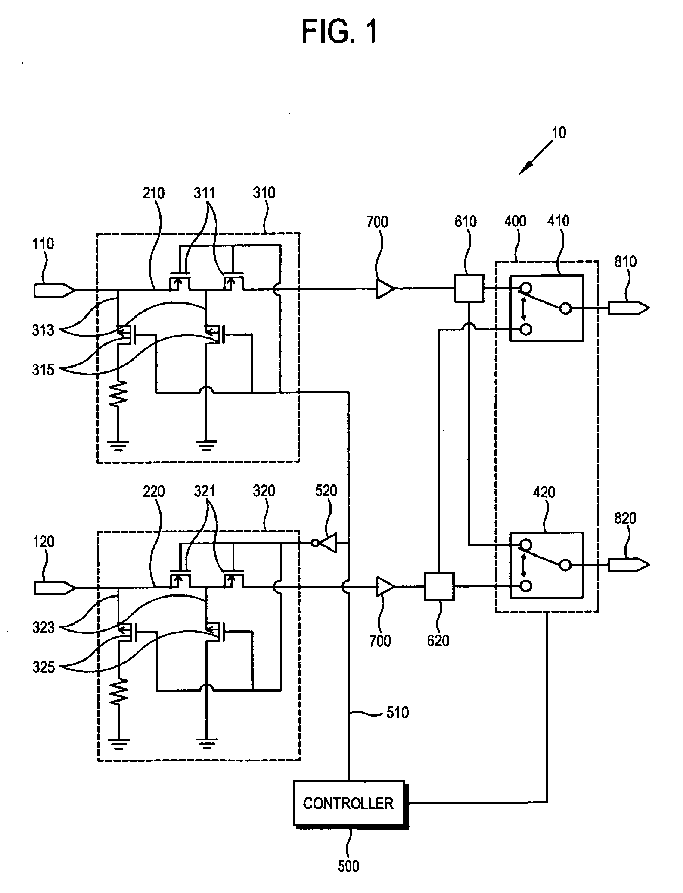

FIG. 1 illustrates a switching circuit 10 of a display apparatus according to a first exemplary embodiment of the present general inventive concept.

As shown therein, the switching circuit 10 according to the first exemplary embodiment of the present general inventive concept includes a plurality of line switching units 310 and 320 which respectively corresponds to a plurality of image signals and selectively transmits the image signals, an output switching unit 400 which selectively outputs one of the plurality of image signals transmitted by the line switching units 310 and 320 and a controller 500 which controls operations of the plurality of line switching units 310 and 320 and the output switching unit 400.

According to the first exemplary embodiment of the present general inventive concept, the switching circuit 10 receives two types of image signals, e.g. an image signal from an airwave antenna and an image signal from a cable, but not limited thereto. The property and number of image signals may vary. For example, the switching circuit 10 may receive three or more image signals which are different.

The switching circuit 10 includes a first input port 110 and a second input port 120 to receive image signals. The switching circuit 10 includes a fist transmission line 210 and a second transmission line 220 to transmit the image signals from the first and second input ports 110 and 120 to the output switching unit 400.

The first input port 110 and the first transmission line 210 are provided in parallel with the second input port 120 and the second transmission line 220. Also, the first input port 110 and the first transmission line 210 are insulated from the second input port 120 and the second transmission line 220. Even if the number of input ports and transmission lines is three or more, the same principle may apply.

The plurality of line switching units 310 and 320 includes a first line switching unit 310 which is switched to transmit the image signal through the first transmission line 210 and a second line switching unit 320 which is switched to transmit the image signal through the second transmission line 220. The first and second line switching units 310 and 320 correspond to the first and second transmission lines 210 and 220, respectively.

The configuration of the first line switching unit 310 will be described hereinafter. Repetitive descriptions for the second line switching unit 320 will be avoided as necessary.

The first line switching unit 310 includes a first main switching element 311 which is installed on the first transmission line 210 and a first branch switching element 315 which is installed on a first branch line 313 branched from the first transmission line 210 and having an end part connected to the ground.

The first main switching element 311 and the first branch switching element 315 may include a field effect transistor (FET).

The first main switching element 311 and the first branch switching element 315 operate according to a control of the controller 500. More specifically, if one of a high-level control signal and a low-level control signal is applied by the controller 500, the first main switching element 311 and the first branch switching element 315 are turned on or turned off.

The first main switching element 311 and the first branch switching element 315 have reverse logical operations. That is, if the first main switching element 311 is turned on, the first branch switching element 315 is turned off, and vice versa.

With the foregoing configuration, if the first main switching element 311 and the first branch switching element 315 are turned on or turned off by the applied control signal, the first line switching unit 310 transmits an image signal through the first transmission line 210 or shuts down the transmission of the image signal therethrough.

Hereinafter, it is assumed that the first main switching element 311 is turned on by the high-level control signal. Here, the first branch switching element 315 receives the same high-level control signal. As the logical operation of the first branch switching element 315 is opposite to that of the first main switching element 311, the first branch switching element 315 is turned off by the high-level control signal.

As the first main switching element 311 is turned on, the image signal is transmitted from the first input port 110 to the first transmission line 210. As the first branch switching element 315 is turned off, the image signal is not transmitted through the first branch line 313.

Conversely, if a low-level control signal is applied, the first main switching element 311 is turned off and the first branch switching element 315 is turned on. Then, the image signal is transmitted to the ground through the first branch line 313 instead of to the first transmission line 210.

With such a principle, the first line switching unit 310 selectively allows or shuts down the transmission of the image signal through the first transmission line 210.

A branch point of the first branch line 313 may be formed on a front end of the first main switching element 311, i.e. on the first transmission line 210 between the first input port 110 and the first main switching element 311.

Each of the first main switching element 311 and the first branch switching element 315 may be plurally provided so that the first line switching element 310 may efficiently and stably allow or shut down the transmission of the image signal. The plurality of first main switching elements 311 is provided in series along the first transmission line 210. While the plurality of first branch lines 313 is branched from the first transmission line 210 in parallel with each other and connected to the ground, the first branch switching element 315 is installed on each of the first branch lines 313. Each of the first branch lines 313 may be disposed in the most front end of the plurality of first main switching elements 311, but not limited thereto. The design of the first branch lines 313 may vary.

The second line switching unit 320 includes a second main switching element 321 which is installed on the second transmission line 220 and a second branch switching element 325 which is installed on a second branch line 323 branched from the second transmission line 220 and having an end part connected to the ground, and has a logical operation opposite to that of the second main switching element 321.

The operations of the second main switching element 321 and the second branch switching element 325 are similar to those of the first main switching element 311 and the first branch switching element 315, respectively. If one of the high-level and low-level control signals is applied, the first main switching element 311 and the second main switching element 321 are turned on or turned off. The first branch switching element 315 and the second branch switching element 325 are also turned on or turned off, oppositely to the first and second main switching elements 311 and 321.

Meanwhile, if the first line switching unit 310 transmits the image signal, the second line switching unit 320 shuts down the transmission of the image signal. Likewise, if the first line switching unit 310 shuts down the transmission of the image signal, the second line switching unit 320 transmits the image signal. The control signals applied to the first and second line switching units 310 and 320 may have different properties.

A control signal line 510 and an inverter 520 are provided so that the controller 500 applies different control signals to the first line switching unit 310 and the second line switching unit 320. The control signal line 510 extends from the controller 500 and is branched to the first and second line switching units 310 and 320. The inverter 520 is provided on the control signal line 510 between the branch points of the control signal line 510 and the second line switching unit 320 to convert the property of the control signal. The control signal line 510 is branched so that the controller 500 transmits a control signal to the switching elements 311, 315, 321 and 325.

For example, if the control signal applied by the controller 500 has a high level, the first line switching unit 310 receives the high-level control signal as it is. However, the second line switching unit 320 receives the control signal converted into the low-level by the inverter 520.

According to another exemplary embodiment, the inverter 520 may be provided on the control signal line 510 of the first line switching unit 310. In this case, the control signal may correspond thereto.

The switching circuit 10 may further include a first splitter 610 and a second splitter 620 which are provided in a rear end of the first and second line switching units 310 and 320, respectively. The first and second splitters 610 and 620 split the image signal transmitted by the first and second transmission lines 210 and 220 and output the image signals to the output switching unit 400. According to the present embodiment of the present general inventive concept, the first and second splitters 610 and 620 split the image signal into two image signals, but not limited thereto.

As described above, the first and second line switching units 310 and 320 operate opposite to each other. Thus, if the first splitter 610 receives an image signal from the first line switching unit 310, the second splitter 620 does not receive an image signal from the second line switching unit 320, and vice versa.

The switching circuit 10 may further include an amplifier 700 to amplify an image signal.

The output switching unit 400 includes a first output switch 410 and a second output switch 420 which are provided as a switching IC. The first and second output switches 410 and 420 receive image signals from the first and second splitters 610 and 620, respectively. The first and second output switches 410 and 420 output the image signals to first and second output ports 810 and 820.

The first output switch 410 receives a pair of image signals including one from the first splitter 610 and the other one from the second splitter 620. The second output switch 420 receives a remaining pair of image signals. The first and second output switches 410 and 420 are switched to output one of the pair of image signals to the first and second output ports 810 and 820. The first and second output switches 410 and 420 are controlled by the controller 500.

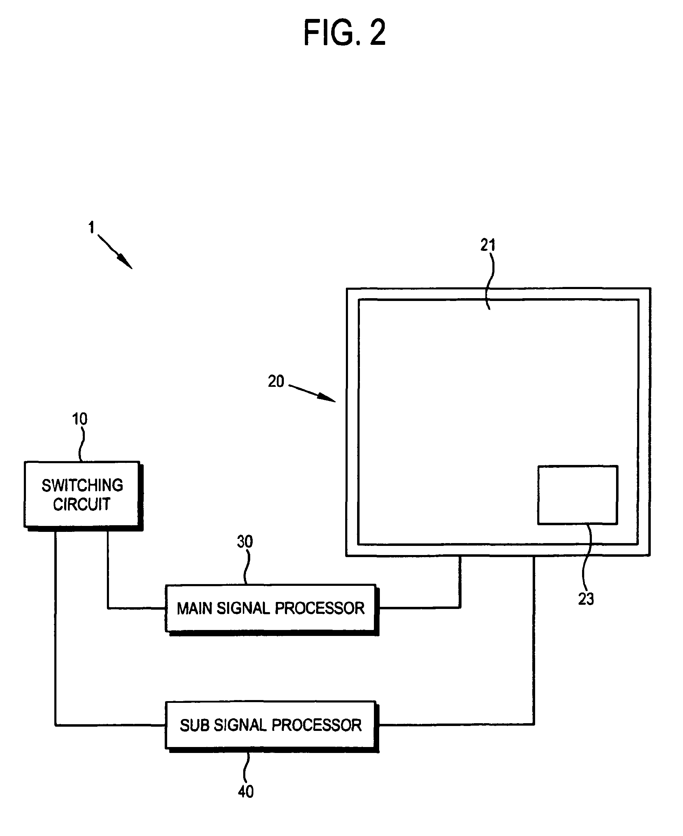

FIG. 2 illustrates a display apparatus 1 which displays two image signals split and outputted by the switching circuit 10, i.e. outputted from the first and second output ports 810 and 820, respectively, on a plurality of screens.

As shown therein, the display apparatus 1 according to the exemplary embodiment of the present general inventive concept includes the switching circuit 10, a display unit 20 to display an image thereon, and a main signal processor 30 and a sub signal processor 40 to process two image signals transmitted by the switching circuit 10 and display images on the display unit 20.

An image signal which is outputted by the first output port 810 refers to a first image signal. An image signal which is outputted by the second output port 820 refers to a second image signal. If the switching circuit 10 selects one of a plurality of image signals inputted by the first and second input ports 110 and 120, the selected image signal is split into the first and second image signals.

The display unit 20 provides a PIP (picture in picture) function. That is, the display unit 20 divides a screen into a main screen 21 and a sub screen 23, and displays different images on the main screen 21 and the sub screen 23, respectively. The main screen 21 includes an overall region of the screen in the display unit 20 while the sub screen 23 includes a pop-up type screen corresponding to a part of the main screen 21.

The main signal processor 30 receives the first image signal from the switching circuit 10 and processes the first image signal to be displayed as an image on the main screen 21. The sub signal processor 40 receives the second image signal from the switching circuit 10 and processes the second image signal to be displayed as an image on the sub screen 23. The method of processing the image signals by the main signal processor 30 and the sub signal processor 40 is known in the art. Thus, the description will be omitted.

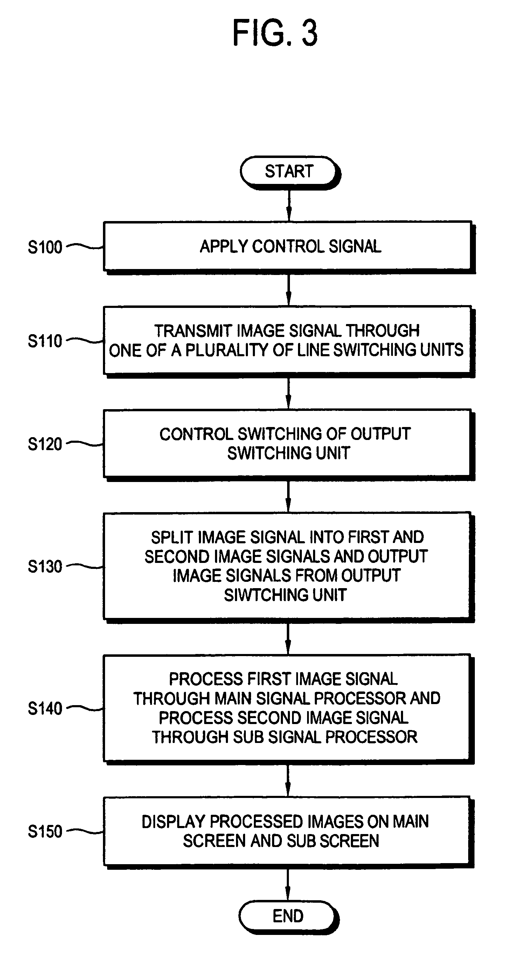

With the foregoing configuration, a process of outputting the image signal from the switching circuit 10 and displaying the image on the display unit 20 of the display apparatus 1 according to the exemplary embodiment of the present general inventive concept will be described with reference to FIGS. 1 to 3.

The first and second input ports 110 and 120 receive different image signals. If an image signal inputted to the first input port 110 is to be transmitted and if another image signal inputted to the second input port 120 is to be shut down, the controller 500 applies a control signal, e.g. the high-level control signal to the first and second line switching units 310 and 320 (S100).

If the high-level control signal is applied, the first line switching unit 310 transmits the image signal while the second line switching unit 320 shuts down the transmission of the image signal (S110). More specifically, the first main switching element 311 is turned on and the first branch switching element 315 is turned off by the high-level control signal. The inverter 520 converts the high-level control signal into the low-level control signal. Then, the second main switching element 321 is turned off and the second branch switching element 325 is turned on. Thus, the image signal through the first transmission line 210 is transmitted, and the image signal through the second transmission line 220 is connected to the ground through the second branch line 323.

The controller 500 controls the output switching unit 400 to output the selected image signal (S120), which may be performed right after the image signal is selected.

The image signal is transmitted from the first line switching unit 310 to the first splitter 610 through the first transmission line 210. The first splitter 610 splits the image signal into the first and second image signals and outputs the first and second image signals. The outputted first and second image signals are transmitted to the first and second output switches 410 and 420, respectively. As the first and second output switches 410 and 420 are already controlled by the controller 500, the first and second image signals are outputted to the first and second output ports 810 and 820, respectively (S130).

The main signal processor 30 processes the outputted first image signal to display an image while the second signal processor 40 processes the outputted second image signal to display an image (S140). The image processed by the main signal processor 30 is displayed on the main screen 21 while the image processed by the sub signal processor 40 is displayed on the sub screen 23 (S150).

As described above, the transmission lines 210 and 220 include the line switching units 310 and 320 to selectively transmit the plurality of image signals to the output switching unit 400. Thus, the insulation between the selected image signal and other image signals may improve.

The insulated, outputted image signal is split and processed to be displayed as images on the main screen 21 and the sub screen 23 of the display unit 20 having the PIP function.

According to a second exemplary embodiment, a process of applying a control signal to a plurality of line switching units 310 and 320 and splitting the selected image signal is different from that of the first exemplary embodiment. Hereinafter, a display apparatus according to the second exemplary embodiment of the present general inventive concept will be described. Repetitive descriptions will be avoided as necessary.

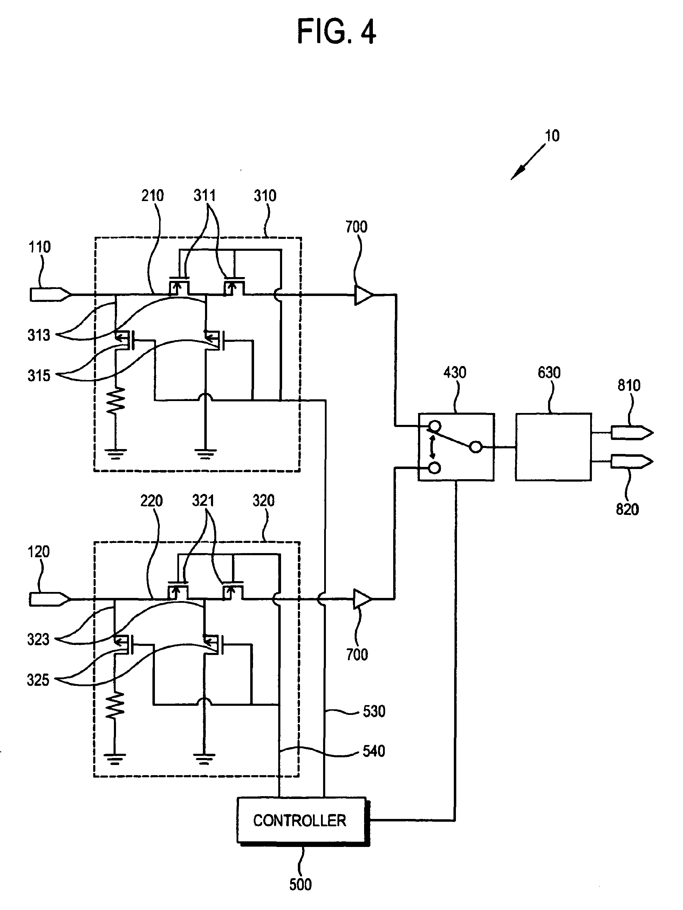

As shown in FIG. 4, in a switching circuit 10 of the display apparatus according to the second exemplary embodiment of the present general inventive concept, a controller 500 independently applies a control signal to a first line switching unit 310 and a second line switching unit 320. Thus, the controller 500 includes a first control line 530 and a second control line 540 which are connected to the first and second line switching units 310 and 320, respectively.

If a high-level control signal is applied to the first line switching unit 310 to transmit an image signal from a first input port 110, the controller 500 applies the high-level control signal through the first control line 530 and applies a low-level control signal through the second control line 540. Meanwhile, if the low-level control signal is applied to the first control line 530 and the high-level control signal is applied to the second control line 540, the image signal is transmitted from a second input port 120.

A rear end of the first and second transmission lines 210 and 220 is connected to a single output switching unit 430 instead of being branched like that in the first exemplary embodiment. The output switching unit 430 is controlled by the controller 500 to output the image signal corresponding to one of the transmission lines 210 and 220 transmitting the image signal.

The image signal outputted by the output switching unit 430 is transmitted to a splitter 630. The splitter 630 splits the image signal and outputs the image signals to first and second output ports 810 and 820.

As described above, the configuration of the display apparatus may vary within the scope of the present general inventive concept.

As described above, the present general inventive concept provides a display apparatus which maximizes an insulation of a switch, minimizes interference between a selected image signal and other image signals and secures a quality of a displayed image while selecting one of a plurality of image signals through a switch, and a control method thereof.

Also, the present general inventive concept provides a display apparatus which includes a display unit having a PIP (picture in picture) function and secures a quality of an image displayed on a main screen and a sub screen, and a control method thereof.

Although a few exemplary embodiments of the present general inventive concept have been shown and described, it will be appreciated by those skilled in the art that changes may be made in these exemplary embodiments without departing from the principles of the invention, the scope of which is defined in the appended claims and their equivalents.

## Claims

1. A display apparatus, comprising:
a plurality of line switching units (310,320) which correspond to a plurality of image signals and selectively transmit the plurality of image signals;
an output switching unit (400) which selectively outputs one of the plurality of image signals transmitted by the plurality of line switching units (310,320); and
a controller (500) which controls the line switching units (310,320) and the output switching unit (400) to output one of the plurality of image signals;
wherein each of the line switching units (310,320) comprises:
two main switching elements (311/321) installed in series on a transmission line (210/220) transmitting an image signal to the output switching unit (400);
two branch lines (313/323) branched from the transmission line (210/220), a first of the two branch lines (313/323) branching off before the two main switching elements (311/321) and a second of the two branch lines (313/323) branching off between the two main switching elements (311/321);
a first branch switching element (315/325) installed on the first branch line (313/323) and having an end part connected to ground via a resistor; and
a second branch switching element (315/325) installed on the second branch line (313/323) and having an end part connected to ground;
wherein, when the main switching elements (311/321) are turned on, the corresponding branch switching elements (315/325) are turned off and when the main switching elements (311/321) are turned off, the corresponding branch switching elements (315/325) are turned on; and
wherein when a first of the line switching units (310,320)is turned on a second of the line switching units is turned off and when the first of the line switching units (310,320)is turned off the second of the line switching units is turned on.

2. The display apparatus according to claim 1, wherein the transmission line (210, 220) is plurally provided, and the plurality of line switching units (310, 320) correspond to each transmission line (210, 220) respectively.

3. The display apparatus according to any preceding claim, wherein the output switching unit (400) comprises a first output switch (410) and a second output switch (420) which output the image signals, respectively,
the display apparatus further comprising:
a splitter (610, 620) which splits the image signal transmitted by the line switching units (310, 320) into a first image signal and a second image signal and transmits the first and second image signals to the first and second output switches (410, 420), respectively.

4. The display apparatus according to claim 3, further comprising:
a display unit (20) which has a main screen (21) and a sub screen (23) and displays images on the main screen (21) and the sub screen;
a main signal processor (30) which processes the first image signal and displays an image on the main screen (21); and
a sub signal processor (40) which processes the second image signal and displays an image on the sub screen (23).

5. The display apparatus according to any preceding claim, further comprising a splitter (630) which splits an image signal outputted by the output switching unit (430) into a first image signal and a second image signal to output the image signals.

6. A control method of a display apparatus, the control method comprising:
transmitting an image signal by one of a plurality of line switching units (310,320) corresponding to a plurality of image signals respectively; and
outputting the image signal transmitted by one of the line switching units (310,320) through an output switching unit (400);
wherein each of the line switching units (310/320) comprises:
two main switching elements (311/321) installed in series on a transmission line (210/220) transmitting an image signal to the output switching unit (400); and
two branch lines (313/323) branched from the transmission line (210/220), a first of the two branch lines (313/323) branching off before the two main switching elements (311/321) and a second of the two branch lines (313/323) branching off between the two main switching elements (311/321);
a first branch switching element (315/325) installed on the first branch line (313/323) and having an end part connected to ground via a resistor; and
a second branch switching element (315/325) installed on the second branch line (313/323) and having an end part connected to ground;
wherein, when the main switching elements (311/321) are turned on, the corresponding branch switching elements (315/325) are turned off and when the main switching elements (311/321) are turned off, the corresponding branch switching elements (315/325) are turned on; and
wherein when a first of the line switching units (310,320)is turned on a second of the line switching units is turned off and when the first of the line switching units (310,320)is turned off the second of the line switching units is turned on.

7. The control method according to claim 6 wherein the display apparatus further comprises a display unit (20) including a main screen (21) and a sub screen (23) to display images on the main screen (21) and the sub screen (23), respectively,
the outputting the image signal through the output switching unit (400) comprises splitting the image signal transmitted by the line switching unit (310/320) into a first image signal and a second image signal to output the image signals; and
processing the first image signal and the second image signal to display images on the main screen (21) and the sub screen (23), respectively.

8. The control method according to claim 7, wherein the output switching unit (400) comprises a first output switch (410) and a second output switch (420) which output the image signals, respectively, and
the splitting and outputting the image signals comprises transmitting the first image signal and the second image signal to the first output switch (410) and the second output switch (420), respectively.

9. The control method according to claim 7 or claim 8, wherein the splitting and outputting the image signals comprises splitting an image signal outputted by the output switching unit into the first and second image signals.

## Patentansprüche

1. Anzeigevorrichtung, Folgendes umfassend:
eine Vielzahl von Leitungsumschalteinheiten (310, 320), die mit einer Vielzahl von Bildsignalen korrespondieren und die Vielzahl von Bildsignalen selektiv übertragen;
eine Ausgabeumschalteinheit (400), die eines der Vielzahl von Bildsignalen, die von der Vielzahl von Leitungsumschalteinheiten (310, 320) übertragen werden, selektiv ausgibt; und
eine Steuerung (500), die die Leitungsumschalte inheiten (310, 320) un d die Ausgabeumschalteinheit (400) ansteuert, um eines der Vielzahl von Bildsignalen auszugeben;
wobei jede der Leitungsumschalteinheiten (310, 320) Folgendes umfasst:
zwei Hauptumschaltelemente (311/321), die in Reihe in einer Übertragungsleitung (210/220), die ein Bildsignal zu der Ausgabeumschalteinheit (400) überträgt, installiert sind;
zwei Abzweigleitungen (313/323), die von der Übertragungsleitung (210/220) abzweigen, wobei eine erste der zwei Abzweigleitungen (313/323) vor den zwei Hauptumschaltelementen (311/321) abzweigt und eine zweite der zwei Abzweigleitungen (313/323) zwischen den zwei Hauptumschaltelementen (311/321) abzweigt;
ein erstes Abzweigumschaltelement (315/325), das in der ersten Abzweigleitung (313/323) installiert ist und ein über einen Widerstand mit Masse verbundenes Endteil aufweist; und
ein zweites Abzweigumschaltelement (315/325), das in der zweiten Abzweigleitung (313/323) installiert ist und ein mit Masse verbundenes Endteil aufweist;
wobei, wenn die Hauptumschaltelemente (311/321) eingeschaltet sind, die korrespondierenden Abzweigumschaltelemente (315/325) ausgeschaltet sind, und wenn die Hauptumschaltelemente (311/321) ausgeschaltet sind, die korrespondierenden Abzweigumschaltelemente (315/325) eingeschaltet sind; und
wobei, wenn eine erste der Leitungsumschalteinheiten (310, 320) eingeschaltet ist, eine zweite der Leitungsumschalteinheiten ausgeschaltet ist, und wenn die erste der Leitungsumschalteinheiten (310, 320) ausgeschaltet ist, die zweite der Leitungsumschalteinheiten eingeschaltet ist.

2. Anzeigevorrichtung nach Anspruch 1, wobei die Übertragungsleitung (210, 220) vielfach bereitgestellt ist und die Vielzahl von Leitungsumschalteinheiten (310, 320) jeweils mit jeder Übertragungsleitung (210, 220) korrespondiert.

3. Anzeigevorrichtung nach einem der vorstehenden Ansprüche, wobei die Ausgabeumschalteinheit (400) einen ersten Ausgabeumschalter (410) un d einen zweiten Ausgabeumschalter (420), die die Signale jeweils ausgeben, umfasst,
wobei die Anzeigevorrichtung weiter Folgendes umfasst:
einen Verteiler (610, 620), der das von den Leitungsumschalte inheiten (310, 320) übertragene Bildsignal in ein erstes Bildsignal und ein zweites Bildsignal teilt und das erste und zweite Bildsignal zu dem ersten bzw. zweiten Ausgabeumschalter (410, 420) überträgt.

4. Anzeigevorrichtung nach Anspruch 3, weiter Folgendes umfassend:
eine Anzeigeeinheit (20), die einen Hauptbildschirm (21) und einen Nebenbildschirm (23) aufweist und Bilder auf dem Hauptbildschirm (21) und dem Nebenbildschirm anzeigt;
einen Hauptsignalprozessor (30), der das erste Bildsignal verarbeitet und ei n Bild au f dem Hauptbildschirm (21) anzeigt; und
einen Nebensignalprozessor (40), der das zweite Bildsignal verarbeitet und ei n Bild au f dem Nebenbildschirm (23) anzeigt.

5. Anzeigevorrichtung nach einem der vorstehenden Ansprüche, weiter umfassend einen Verteiler (630), der ein von der Ausgabeumschalteinheit (430) ausgegebenes Bildsignal in ein erstes Bildsignal und ein zweites Bildsignal teilt, um die Bildsignale auszugeben.

6. Ansteuerungsverfahren einer Anzeigevorrichtung, wobei das Ansteuerungsverfahren Folgendes umfasst:
Übertragen eines Bildsignals durch eine einer Vielzahl von Leitungsumschalteinheiten (310, 320), die jeweils mit einer Vielzahl von Bildsignalen korrespondieren; und
Ausgeben des von einer der Leitungsumschalteinheiten (310, 320) übertragenen Bildsignals durch eine Ausgabeumschalteinheit (400);
wobei jede der Leitungsumschalteinheiten (310/320) Folgendes umfasst:
zwei Hauptumschaltelemente (311/321), die in Reihe in einer Übertragungsleitung (210/220), die ein Bildsignal zu der Ausgabeumschalteinheit (400) überträgt, installiert sind; und
zwei Abzweigleitungen (313/323), die von der Übertragungsleitung (210/220) abzweigen, wobei eine erste der zwei Abzweigleitungen (313/323) vor den zwei Hauptumschaltelementen (311/321) abzweigt und eine zweite der zwei Abzweigleitungen (313/323) zwischen den zwei Hauptumschaltelementen (311/321) abzweigt;
ein erstes Abzweigumschaltelement (315/325), das in der ersten Abzweigleitung (313/323) installiert ist und ein über einen Widerstand mit Masse verbundenes Endteil aufweist; und
ein zweites Abzweigumschaltelement (315/325), das in der zweiten Abzweigleitung (313/323) installiert ist und ein mit Masse verbundenes Endteil aufweist;
wobei, wenn die Hauptumschaltelemente (311/321) eingeschaltet sind, die korrespondierenden Abzweigumschaltelemente (315/325) ausgeschaltet sind, und wenn die Hauptumschaltelemente (311/321) ausgeschaltet sind, die korrespondierenden Abzweigumschaltelemente (315/325) eingeschaltet sind; und
wobei, wenn eine erste der Leitungsumschalteinheiten (310, 320) eingeschaltet ist, eine zweite der Leitungsumschalteinheiten ausgeschaltet ist, und wenn die erste der Leitungsumschalteinheiten (310, 320) ausgeschaltet ist, die zweite der Leitungsumschalteinheiten eingeschaltet ist.

7. Ansteuerungsverfahren nach Anspruch 6, wobei die Anzeigevorrichtung weiter eine Anzeigeeinheit (20) umfasst, die einen Hauptbildschirm (21) und einen Nebenbildschirm (23) enthält, um Bilder auf dem Hauptbildschirm (21) bzw. dem Nebenbildschirm (23) anzuzeigen,
das Ausgeben des Bildsignals durch die Ausgabeumschalteinheit (400) umfasst, das von der Leitungsumschalte inheit (310/320) übertragene Bildsignal in ein erstes Bildsignal und ein zweites Bildsignal zu teilen, um die Bildsignale auszugeben; und
Verarbeiten des ersten Bildsignals und des zweiten Bildsignals, um Bilder auf dem Hauptbildschirm (21) bzw. dem Nebenbildschirm (23) anzuzeigen.

8. Ansteuerungsverfahren nach Anspruch 7, wobei die Ausgabeumschalte inheit (400) einen ersten Ausgabeumschalter (410) un d einen zweiten Ausgabeumschalter (420), die jeweils die Bildsignale ausgeben, umfasst, und
das Teilen und Ausgeben der Bildsignale umfasst, das erste Bildsignal und das zweite Bildsignal zu dem ersten Ausgabeumschalter (410) bzw. dem zweiten Ausgabeumschalter (420) zu übertragen.

9. Ansteuerungsverfahren nach Anspruch 7 oder Anspruch 8, wobei das Teilen und Ausgeben der Bildsignale umfasst, ein von der Ausgabeumschalteinheit ausgegebenes Bildsignal in das erste und zweite Bildsignal zu teilen.

## Revendications

1. Appareil d'affichage, comprenant :
une pluralité d'unités de commutation de ligne (310, 320) qui correspondent à une pluralité de signaux d'image et transmettent sélectivement la pluralité de signaux d'image ;
une unité de commutation de sortie (400) qui fournit en sortie sélectivement l'un de la pluralité de signaux d'image transmis par la pluralité d'unités de commutation de ligne (310, 320) ; et
une unité de commande (500) qui commande les unités de commutation de ligne (310, 320) et l'unité de commutation de sortie (400) pour fournir en sortie l'un de la pluralité de signaux d'image ;
dans lequel chacune des unités de commutation de ligne (310, 320) comprend :
deux éléments de commutation principaux (311/321) installés en série su r une ligne de transmission (210/220) transmettant un signal d'image à l'unité de commutation de sortie (400) ;
deux lignes de ramification (313/323) se ramifiant à partir de la ligne de transmission (210/220), une première des deux lignes de ramification (313/323) se ramifiant avant le s deux éléments d e commutation principaux (311/321) et une seconde des deux lignes de ramification (313/323) se ramifiant entre les deux éléments de commutation principaux (311/321) ;
un premier élément de commutation de ramification (315/325) installé sur la première ligne de ramification (313/323) et ayant une partie d'extrémité connectée à la masse via une résistance ; et
un second élément de commutation de ramification (315/325) installé sur la seconde ligne de ramification (313/323) et ayant une partie d'extrémité connectée à la masse ;
dans lequel, lorsque les éléments de commutation principaux (311/321) sont rendus passants, les éléments de commutation de ramification correspondants (315/325) sont rendus non passants et lorsque les éléments de commutation principaux (311/321) sont rendus non passants, les éléments de commutation de dérivation correspondants (315/325) sont rendus passants ; et
dans lequel lorsqu'une première des unités de commutation de ligne (310, 320) est rendue passante,
une seconde des unités de commutation de ligne est rendue non passante et lorsque la première des unités de commutation de ligne (310, 320) est rendue non passante, la seconde des unités de commutation de ligne est rendue passante.

2. Appareil d'affichage selon la revendication 1, dans lequel il est prévu une pluralité de lignes de transmission (210, 220), et la pluralité d'unités de commutation de ligne (310, 320) correspondent respectivement à chaque ligne de transmission (210, 220).

3. Appareil d'affichage selon l'une quelconque des revendications précédentes, dans lequel l'unité de commutation de sortie (400) comprend un commutateur de sortie (410) et un second commutateur de sortie (420) qui fournissent respectivement les signaux d'image, l'appareil d'affichage comprenant en outre :
une séparatrice (610, 620) qui sépare le signal d'image transmis par les unités de commutation de ligne (310, 320) en un premier signal d'image et un second signal d'image et transmet respectivement les premier et second signaux d'image aux premier et second commutateurs de sortie (410 , 420).

4. Appareil d'affichage selon la revendication 3, comprenant en outre :
une unité d'affichage (20) qui comporte un écran principal (21) et un écran secondaire (23) et affiche des images sur l'écran principal (21) et sur l'écran secondaire ;
un processeur de signal principal (30) qui traite le premier signal d'image et affiche une image sur l'écran principal (21) ; et
un processeur de signal secondaire (40) qui traite le second signal d'image et affiche une image sur l'écran secondaire (23).

5. Appareil d'affichage selon l'une quelconque des revendications précédentes, comprenant en outre une séparatrice (630) qui sépare un signal d'image fourni en sortie par l'unité de commutation de sortie (430) en un premier signal d'image et un second signal d'image pour fournir en sortie les signaux d'image.

6. Procédé de commande d'un appareil d'affichage, le procédé de commande comprenant :
la transmission d'un signal d'image par l'une d'une pluralité d'unités de commutation de ligne (310, 320) correspondant respectivement à une pluralité de signaux d'image ;
la fourniture en sortie du signal d'image transmis par l'une des unités de commutation de ligne (310, 320) par l'intermédiaire d'une unité de commutation de sortie (400) ;
dans lequel chacune des unités de commutation de ligne (310/320) comprend :
deux éléments de commutation principaux (311/321) installés en série sur une ligne de transmission (210/220) transmettant un signal d'image à l'unité de sortie de commutation (400) ; et
deux lignes de ramification (313/323) se ramifiant à partir de la ligne de transmission (210/220), une première des deux lignes de ramification (313/323) se ramifiant avant le s deux éléments d e commutation principaux (311/321) et une seconde des deux lignes de ramification (313/323) se ramifiant entre les deux éléments de commutation principaux (311/321) ;
un premier élément de commutation de ramification (315/325) installé sur la première ligne de ramification (313/323) et ayant une partie d'extrémité connectée à la masse via une résistance ; et
un second élément de commutation de ramification (315/325) installé sur la seconde ligne de ramification (313/323) et ayant une partie d'extrémité connectée à la masse ;
dans lequel, lorsque les éléments de commutation principaux (311/321) sont rendus passants, les éléments de commutation de ramification correspondants (315/325) sont rendus non passants et lorsque les éléments de commutation principaux (311/321) sont rendus non passants, les éléments de commutation de ramification correspondants (315/325) sont rendus passants ; et
dans lequel lorsqu'une première des unités de commutation de ligne (310, 320) est rendue passante,
une seconde des unités de commutation de ligne est rendue non passante et lorsque la première des unités de commutation de ligne (310, 320) est rendue non passante, la seconde des unités de commutation de ligne est rendue passante.

7. Procédé de commande selon la revendication 6, dans lequel l'appareil d'affichage comprend en outre une unité d'affichage (20) comprenant un écran principal (21) et un écran secondaire (23) pour afficher respectivement d e s images sur l'écran principal (21) et l'écran secondaire (23),
la fourniture en sortie du signal d'image par l'intermédiaire de l'unité de commutation de sortie (400) comprend la séparation du signal d'image transmis par l'unité de commutation de ligne (310/320) en un premier signal d'image et un second signal d'image pour fournir en sortie les signaux d'image ; et
le traitement du premier signal d'image et du second signal d'image pour afficher respectivement des images sur l'écran principal (21) et l'écran secondaire (23).

8. Procédé de commande selon la revendication 7, dans lequel l'unité de commutation de sortie (400) comprend un premier commutateur de sortie (410) et un second commutateur de sortie (420) qui fournissent respectivement en sortie les signaux d'image, et
la séparation et la fourniture en sortie des signaux d'image comprend respectivement la transmission du premier signal d'image et du second signal d'image au premier commutateur de sortie (410) et au second commutateur de sortie (420).

9. Procédé de commande selon la revendication 7 ou la revendication 8, dans lequel la séparation et la fourniture en sortie des signaux d'image comprennent la séparation d'un signal d'image fourni en sortie par l'unité de commutation de sortie en les premier et second signaux d'image.
